# EUROPEAN PATENT APPLICATION

(11) **EP 2 998 512 A1**
(43) Date of publication of application: **23.03.2016**
(21) Application number: 15185123.5
(22) Date of filing: 14.09.2015
(51) Int. Cl.: F01D 5/18, F01D 9/06

(54) **FILM COOLED COMPONENTS AND CORRESPONDING OPERATING METHOD**

(30) Priority: 17.09.2014 US 201462051369 P
(71) Applicant: United Technologies Corporation, Hartford, CT 06101 (US)
(72) Inventor: SPANGLER, Brandon W., Vernon, CT Connecticut 06066 (US); CARR, Jesse M., Hartford, CT Connecticut 06103 (US); DUBE, Bryan P., Columbia, CT Connecticut 06237 (US); XUE, Yongxiang D., Glastonbury, CT Connecticut 06033 (US)
(74) Representative: Leckey, David Herbert

(57) **Abstract**

A film cooled component (100) includes multiple film cooling holes (120). At least one of the film cooling holes (120) has an elliptical cross sectional opening along the exterior surface of the film cooled component (100).

## Description

### TECHNICAL FIELD

The present disclosure relates generally to film cooled articles, and specifically to a film cooled article for use within a gas turbine engine.

### BACKGROUND

Gas turbine engines, such as those utilized in commercial and military aircraft, typically include a compressor that draws in and compresses air, a combustor that mixes the compressed air with a fuel and ignites the mixture, and a turbine that expands the gases resultant from the combustion. The turbine is connected to the compressor via at least one shaft (alternately referred to as a spool). The expansion of the gases through the turbine section drives the turbine section to rotate, and the shaft connection in turn drives the compressor to rotate.

As a result of the above operations, internal temperatures within the gas turbine engine can reach extremely high levels. Cooling systems are implemented within the gas turbine engine to cool some or all of the internal components and prevent thermal damage from occurring. One example cooling system is a film cooling system that is used to provide a cooling film over a surface of a component. The cooling film can be any coolant including, but not limited to, air.

The cooling film is provided to the surface of the component through multiple small openings referred to as film cooling holes. The coolant is ejected from the film cooling holes and entrains along the surface of the component providing a buffer layer that simultaneously cools the component and prevents hot gases from contacting the component.

### SUMMARY OF THE INVENTION

In one example embodiment, a film cooled component includes a plurality of film cooling holes, at least one of the film cooling holes in the plurality of film cooling holes having an elliptical cross sectional opening, and wherein the at least one film cooling hole in the plurality of film cooling holes has a ratio of largest radius to smallest radius in the range of 1.5:1-2.5:1.

In another example embodiment of the above described film cooled component, each of the film cooling holes in the plurality of film cooling holes is a uniform shape and a uniform orientation.

In another example embodiment of any of the above described film cooled components, the at least one film cooling hole in the plurality of film cooling holes has a ratio of largest radius to smallest radius of approximately 2.

In another example embodiment of any of the above described film cooled components, each film cooling hole in the plurality of film cooling holes is evenly spaced along a height of the film cooled component.

In another example embodiment of any of the above described film cooled components, a ligament distance between the at least one film cooling hole and an adjacent film cooling hole is within the range of 0.03 inches to 0.06 inches (0.076 to 0.15 centimeters).

In another example embodiment of any of the above described film cooled components, a ligament distance between the at least one film cooling hole and the adjacent film cooling hole is approximately 0.04 inches (0.10 centimeters).

In another example embodiment of any of the above described film cooled components, a ratio of a longest radius of the at least one film cooling hole to a ligament distance of the film cooling hole is in the range of 1:1-2:1.

In another example embodiment of any of the above described film cooled components, the ratio of the longest radius of the at least one film cooling hole to the ligament distance of the film cooling hole is in the range of 1.4:1-1.5:1.

In another example embodiment of any of the above described film cooled components, the at least one of the film cooling holes in the plurality of film cooling holes includes a largest radius, and wherein the largest radius of the film cooling hole is generally aligned with a height of the film cooled component.

In another example embodiment of any of the above described film cooled components, the film cooled component is comprised of at least one of Molybdenum, a monolithic ceramic, and a ceramic matrix composite.

In another example embodiment of any of the above described film cooled components, the plurality of film cooling holes are linearly arranged between an inner diameter edge and an outer diameter edge of the film cooled component.

In another example embodiment, a film cooled component for a gas turbine engine includes a plurality of film cooling holes distributed across an exterior surface of a film cooled component body, each of the film cooling holes having an elliptical cross section along the exterior surface, and wherein a ratio of a longest radius of each film cooling hole to a ligament distance of the film cooling hole is in the range of 1:1-2:1.

In another example embodiment of any of the above described film cooled components, each of the film cooling holes in the plurality of film cooling holes includes a largest radius, and wherein the largest radii of the film cooling holes are generally aligned with a height of the film cooled component.

In another example embodiment of any of the above described film cooled components, the film cooled component is comprised of at least one of Molybdenum, a monolithic ceramic, and a ceramic matrix composite.

In another example embodiment of any of the above described film cooled components, each of the film cooling holes in the plurality of film cooling holes is a uniform shape and a uniform orientation.

In another example embodiment of any of the above described film cooled components, each film cooling hole in the plurality of film cooling holes has a ratio of largest radius to smallest radius in the range of 1.5:1-2.5:1.

In another example embodiment of any of the above described film cooled components, each film cooling hole in the plurality of film cooling holes is evenly spaced along a height of the film cooled component.

In another example embodiment of any of the above described film cooled components, a ligament distance between each film cooling hole and each adjacent film cooling hole is within the range of 0.03 inches to 0.06 inches (0.076 to 0.15 centimeters).

In another example embodiment of any of the above described film cooled components, a ligament distance between each film cooling hole and each adjacent film cooling hole is approximately 0.04 inches (0.10 centimeters).

An exemplary method for reducing thermal stresses localized to a film cooling hole in a film cooled article includes, utilizing a plurality of film cooling holes having an elliptical cross section, wherein the elliptical cross section is defined by a ratio of longest ellipses radius to shortest ellipses radius in the range of 1.5:1-2.5:1, and wherein each of the film cooling holes defines a longest radius of each film cooling hole to a ligament distance of the film cooling hole ratio in the range of 1:1-2:1.

In another example of the above exemplary method, the ratio of longest ellipses radius to shortest ellipses radius in is approximately 2:1.

These and other features of the present invention can be best understood from the following specification and drawings, the following of which is a brief description.

### BRIEF DESCRIPTION OF THE DRAWINGS

Figure 1 schematically illustrates an exemplary gas turbine engine.
Figure 2 schematically illustrates a material stress capability chart.
Figure 3 schematically illustrates a film cooled component for use within the gas turbine engine of Figure 1.
Figure 4 schematically illustrates a partial view of a column of film cooling holes on the film cooled component of Figure 3.

### DETAILED DESCRIPTION OF AN EMBODIMENT

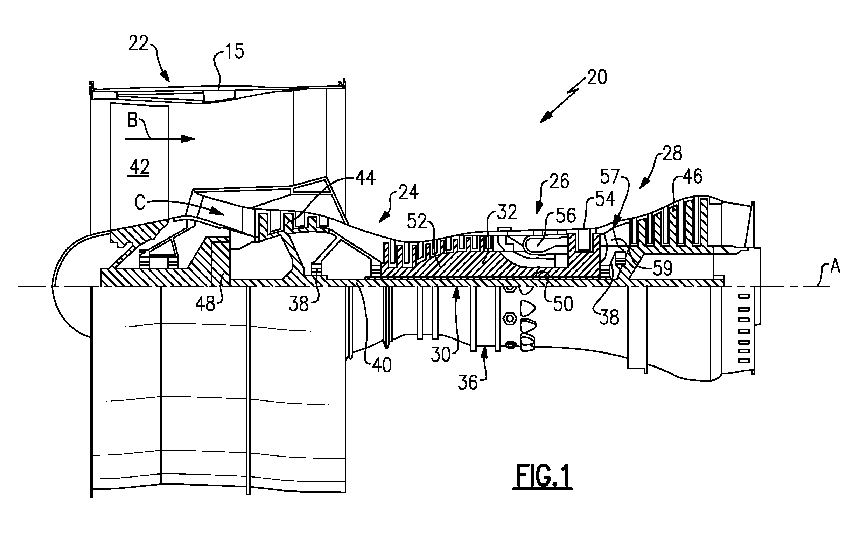

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10668 m). The flight condition of 0.8 Mach and 35,000 ft (10668 m), with the engine at its best fuel consumption - also known as "bucket cruise Thrust Specific Fuel Consumption ('TSFC')" - is the industry standard parameter of Ibm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^0.5. The "Low corrected fan tip speed" as disclosed herein according to one non-limiting embodiment is less than about 1150 ft / second (350.5 m/s).

The components within the gas turbine engine 20 of Figure 1 are exposed to significant heat during operation of the gas turbine engine 20. Multiple cooling methods and techniques, including active cooling and passive cooling, are utilized to cool the various components. An example active cooling technique used to cool some components is film cooling. In order to generate the film layer for the film cooling, an internal passage within the component provides the coolant from a coolant source to multiple small holes connecting the surface of the film cooled component to the internal passages. The small holes are referred to as film cooling holes. Each of the film cooling holes projects the coolant outward along the surface of the component. In existing examples, the small holes have a circular cross section along the surface of the component.

Existing components utilizing the above described film cooling technique are constructed of nickel alloy, or other similar materials that have high thermal stress capabilities. As is understood in the art, significant amounts of the stress on gas turbine engine components arise from the presence of thermal gradients. The thermal gradients occur when portions of a given component are heated to different temperatures or at different rates, resulting in varied thermal expansion and contraction across the component. While providing a general cooling effect, and decreasing the overall stresses and thermal gradients on the component, film cooling holes create a local stress concentration at the location of the film cooling holes.

Nickel alloys, and other currently used materials, have sufficient stress handling capabilities to withstand the localized stresses of a circular film cooling hole. Newer materials, such as Molybdenum, Monolithic Ceramics, ceramic matrix composites, and other brittle alloys have significantly lower stress capabilities than the traditionally used nickel based alloys or similar alloys. By way of example, film cooling is currently used in combustor liners, blade outer air seals, rotor blades, augmentor's and other gas turbine engine components.

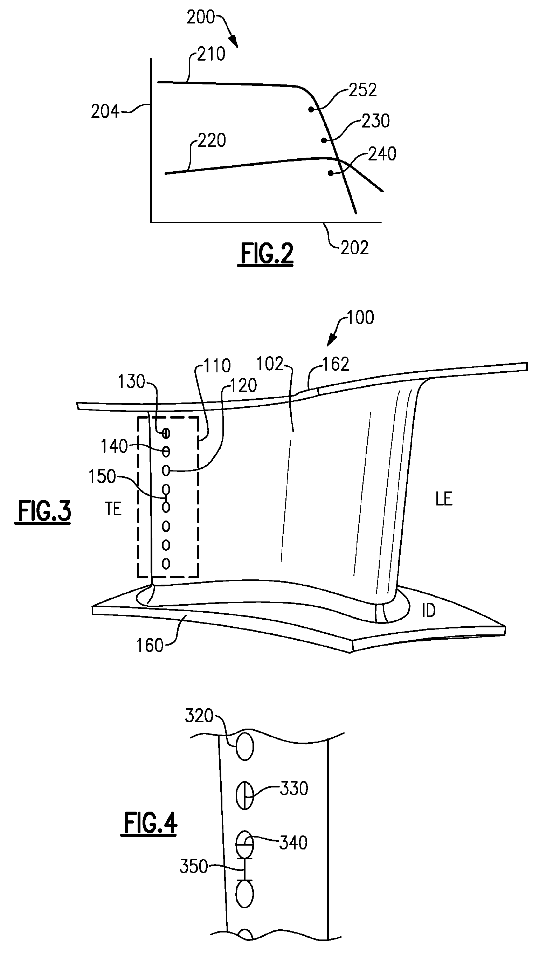

With continued reference to Figure 1, Figure 2 schematically illustrates an example stress capability chart 200, with a component temperature as the horizontal axis 202, and a stress capability of the component material as the vertical axis 204. A first line, 210, indicates the stress capabilities of a traditional nickel based alloy, or a similar material. A second line 220, indicates the stress capabilities of a brittle alloy material. In general any point underneath one of the lines 210, 220 is safe (within stress tolerances) for the given material type. Conversely, a point on or over the line 210, 220 exceeds the material's ability to handle stress at that temperature, and exposure to the conditions indicated by that point could damage the corresponding component 100 (shown in Figure 3).

Circular film cooling holes, such as those used in existing components can, in some examples, exhibit local stresses positioned at approximately point 230 on the chart 200. As can be seen, the example local stresses fall below the traditional material line 210, but above the brittle material line 220 rendering the currently used circular shape unsuitable for use in some example components constructed at least partially of a brittle material. By altering the cross sectional shape of the film cooling holes, as well as the relative spacing of the film cooling holes, the localized stresses shift position on the illustrated chart 200. By way of example, aligned elliptical film cooling holes can exhibit local stresses at a point 240 on the chart 200.

When creating elliptical film cooling holes, the localized stresses shift toward the smaller radius of the elliptical cross section of the film cooling hole. As a result, if the ratio of the largest radius of the elliptical film cooling hole to the smallest radius of the elliptical film cooling hole is too large, the localized stresses are concentrated at the small radius and result in a localized stress point 250 significantly above the brittle material line 220. Utilization of an incorrect ratio of large radius to smaller radius of the ellipses can cause the localized stresses to be worse than the standard circular film cooling hole.

With continued reference to Figures 1 and 2, Figure 3 schematically illustrates a component 100 including a film cooling hole configuration 110 with reduced localized stress at film cooling holes 120 relative to circular film cooling holes. In order to modify the localized stresses, each of the film cooling holes 120 has an elliptical cross section along an exterior surface 102 of the component 100. The film cooling holes 120 are generally aligned in a column, with the longest radius of each film cooling hole 120 being aligned with the longest radius of each other film cooling hole 120. In the illustrated example of Figure 2, the longest radius 130 is vertically aligned and the shortest radius 140 is horizontally aligned. The film cooling holes 120 are generally uniform in size, shape and orientation. The film cooling holes 120 extend from a first edge 160 of the component 100 to a second edge 162 of the component 100. In an annular component, the first edge 160 is an inner diameter edge and the second edge 162 is an outer diameter edge.

In addition to the elliptical cross section of the film cooling holes 120, the vertical spacing of each of the film cooling holes 120 is tightly controlled to further reduce the localized stresses generated by the film cooling holes 120. The shortest distance between each film cooling hole 120 and an adjacent film cooling hole 120 is referred to as the ligament distance 150 of the film cooling hole 120. In the vertically aligned example configuration, the ligament distance 150 will always be a line between the uppermost edge of a film cooling hole 120 and the lowermost edge of an adjacent film cooling hole 120. In alternate film cooling hole 120 alignments, the ligament distance 150 can connect other edges of the film cooling holes 120.

With continued reference to Figures 2 and 3, and with like numerals indicating like elements, Figure 4 schematically illustrates a partial view of the film cooling holes 320, corresponding to the film cooling holes 120 of Figure 3. Each of the film cooling holes 320 illustrated in the example of Figure 4 includes a longest radius 330 oriented vertically, relative the viewpoint of Figure 4. Each of the longest radii 330 are generally aligned, such that the film cooling holes 320 form a column. Each of the elliptical film cooling holes 320 also includes a shortest radius 340, and the shortest radius 340 is normal to the longest radius 330. In some examples, the ratio of the length of the longest radius 330 of each film cooling hole 320 to the shortest radius 340 of each film cooling hole 320 is within the range of 1.5:1 - 2.5:1. In further examples, the ratio of the length of the longest radius 330 of each film cooling hole 320 to the shortest radius 340 of each film cooling hole 320 is approximately 2:1.

Further illustrated in the example of Figure 4 is the ligament distance 350 between each film cooling hole 320 and each adjacent film cooling hole 320. As with the radii 330, 340 of the film cooling holes 320, the ligament distance 350 affects the localized stresses at the film cooling holes 320. By way of example, if the film cooling holes are too close together (the ligament distance 350 is too short), the localized stress zones generated by each film cooling hole 320 can overlap, resulting in an increased stress area. Similarly, if the film cooling holes 320 are spaced too far apart (the ligament distance 350 is too long) inadequate cooling can be provided to the film cooled component. In one example, the ligament distance is in the range of 0.03 inches to 0.06 inches (0.076 to 0.15 centimeters). In another example, the ligament distance is approximately 0.04 inches (0.10 centimeters).

In further examples, the localized stress zones around each film cooling hole 320 depend on the radii 330, 340 of the film cooling holes 320, and the ligament distance 350. In one such example the ratio of the largest radius 330 of the film cooling holes 320 to the ligament distance 350 between the film cooling holes 320 is within the range of 1:1 - 2:1. In yet a further example, the ligament distance 350 between the film cooling holes 320 is within the range of 1.4:1 - 1.5:1.

It is further understood that any of the above described concepts can be used alone or in combination with any or all of the other above described concepts. Although an embodiment of this invention has been disclosed, a worker of ordinary skill in this art would recognize that certain modifications would come within the scope of this invention. For that reason, the following claims should be studied to determine the true scope and content of this invention.

## Claims

1. A film cooled component (100) comprising:
a plurality of film cooling holes (120; 320), at least one of the film cooling holes (120; 320) in the plurality of film cooling holes (120; 320) having an elliptical cross sectional opening; and
wherein the at least one film cooling hole (120; 320) in the plurality of film cooling holes (120; 320) has a ratio of largest radius (130; 330) to smallest radius (140; 340) in the range of 1.5:1-2.5:1.

2. The film cooled component of claim 1, wherein the at least one film cooling hole in the plurality of film cooling holes has a ratio of largest radius to smallest radius of approximately 2.

3. The film cooled component of claim 1 or 2, wherein a ratio of a longest radius (130; 330) of the at least one film cooling hole (120; 320) to a ligament distance (150; 350) of the film cooling hole (130; 330) is in the range of 1:1-2:1.

4. A film cooled component (100) for a gas turbine engine comprising:
a plurality of film cooling holes (120; 320) distributed across an exterior surface of a film cooled component body;
each of the film cooling holes (120; 320) having an elliptical cross section along the exterior surface; and
wherein a ratio of a longest radius (130; 330) of each film cooling hole (120) to a ligament distance (150; 350) of the film cooling hole (92) is in the range of 1:1-2:1.

5. The film cooled component of claim 4, wherein each film cooling hole (120; 320) in the plurality of film cooling holes (120; 320) has a ratio of largest radius to smallest radius in the range of 1.5:1-2.5:1.

6. The film cooled component of any of claims 3, 4 or 5, wherein the ratio of the longest radius (130; 330) of the at least one film cooling hole (120; 320) to the ligament distance (150; 350) of the film cooling hole (120; 320) is in the range of 1.4:1-1.5:1.

7. The film cooled component of any preceding claim, wherein a ligament distance (150; 350) between the or each at least one film cooling hole (120; 320) and an or each adjacent film cooling hole (120; 320) is within the range of 0.03 inches to 0.06 inches (0.076 to 0.15 centimeters).

8. The film cooled component of claim 7, wherein a ligament distance (150; 320) between the or each at least one film cooling hole (120; 320) and the or each adjacent film cooling hole (120; 320) is approximately 0.04 inches (0.10 centimeters).

9. The film cooled component of any preceding claim, wherein each of the film cooling holes (120; 320) in the plurality of film cooling holes (120; 320) is a uniform shape and a uniform orientation.

10. The film cooled component of any preceding claim, wherein each film cooling hole (120; 320) in the plurality of film cooling holes (120; 320) is evenly spaced along a height of the film cooled component (100).

11. The film cooled component of any preceding claim, wherein the at least one of the film cooling holes (130; 320) in the plurality of film cooling holes (120; 320) includes a largest radius (130; 320), and wherein the largest radius (130; 320) of the film cooling hole (120; 320) is generally aligned with a height of the film cooled component (100), or wherein each of the film cooling holes (120; 320) in the plurality of film cooling holes (120; 320) includes a largest radius (130; 330), and wherein the largest radii (130; 330) of the film cooling holes (120; 320) are generally aligned with a height of the film cooled component.

12. The film cooled component of any preceding claim, wherein the film cooled component (120; 320) is comprised of at least one of Molybdenum, a monolithic ceramic, and a ceramic matrix composite.

13. The film cooled component of any preceding claim, wherein the plurality of film cooling holes (120; 320) are linearly arranged between an inner diameter edge (160) and an outer diameter edge (162) of the film cooled component (100).

14. A method for reducing thermal stresses localized to a film cooling hole (120; 320) in a film cooled article (100) comprising:
utilizing a plurality of film cooling holes (120; 320) having an elliptical cross section, wherein the elliptical cross section is defined by a ratio of longest ellipses radius (130; 330) to shortest ellipses radius (140; 340) in the range of 1.5:1-2.5:1; and
wherein each of the film cooling holes (120; 320) defines a longest radius (130; 330) of each film cooling hole (120; 320) to a ligament distance (150; 350) of the film cooling hole (120; 320) ratio in the range of 1:1-2:1.

15. The method of claim 20, wherein the ratio of longest ellipses radius (130; 330) to shortest ellipses radius (140; 340) in is approximately 2:1.
